(19)

**Europäisches Patentamt**
**European Patent Office**
**Office européen des brevets**

(11) **EP 3 633 646 A1**

(12) **EUROPEAN PATENT APPLICATION**
published in accordance with Art. 153(4) EPC

(43) Date of publication:
**08.04.2020 Bulletin 2020/15**

(51) Int Cl.:
*G08C 17/02* (2006.01)          *G08C 17/00* (2006.01)
*H01M 10/48* (2006.01)

(21) Application number: **18840376.0**

(22) Date of filing: **13.07.2018**

(86) International application number:
**PCT/JP2018/026522**

(87) International publication number:
**WO 2019/026591 (07.02.2019 Gazette 2019/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.08.2017  JP 2017149002**

(71) Applicant: **Hitachi Chemical Company, Ltd.**
**Chiyoda-ku**
**Tokyo 100-6606 (JP)**

(72) Inventors:
• **SAKABE Kei**
  **Tokyo 100-8280 (JP)**
• **YAMAZOE Takanori**
  **Tokyo 100-8280 (JP)**

(74) Representative: **Manitz Finsterwald**
**Patent- und Rechtsanwaltspartnerschaft mbB**
**Martin-Greif-Strasse 1**
**80336 München (DE)**

(54) **WIRELESS BATTERY SYSTEM AND WIRELESS SYSTEM**

(57)      A wireless system including a plurality of antennae in a master machine allows selecting a frequency appropriate for communications and allows handling a poor communication due to an interference from an external wireless device and a reflection and a block of a radio wave by a surrounding physical environment. The wireless system includes a slave machine that includes an antenna and the master machine that includes the plurality of antennae. The slave machine and the master machine are capable of wireless transmission and reception mutually using any one of a plurality of communication channels. The master machine has a function that selects and switches an antenna for use among the plurality of antennae and has a function that selects and switches a communication channel for use among the plurality of communication channels. The master machine has a function that switches the communication channel in use to another communication channel when a repetition of successful reception of signals transmitted from the slave machine is less than a predetermined value. Whether the communication channel is switched to the other communication channel is determined as follows: when evaluation orders meet both of the following conditions (1) and (2), a communication channel meeting the condition (2) is the other communication channel having the evaluation order higher than the evaluation order of the communication channel in use,
(1) among the plurality of antennae, when an antenna where the repetition of the successful reception of the signals transmitted from the slave machine is equal to or more than a set value is present at least by one, a communication channel for use in the case, and
(2) among the plurality of antennae, when an antenna where the repetition of the successful reception of the signals transmitted from the slave machine is equal to or more than the set value is present by two or more, a communication channel for use in the case.

*FIG. 1*

## Description

## Technical Field

The present invention relates to a wireless battery system and a wireless system.

## Background Art

To achieve a low-carbon society, an effective use of natural energy, such as wind power and solar light, has been desired. However, these natural energies significantly vary and therefore are unstable in output. Therefore, such means as an equalization of the output by temporarily storing the energy electrically generated with the natural energy in an electric storage device has been considered.

Since the electric storage device is required to be high output and have a large capacity, a battery module constituting the electric storage device has a configuration in which a plurality of secondary batteries (hereinafter also referred to as "cell" or "battery") coupled in series and parallel. Lead batteries and lithium-ion batteries used as the secondary batteries are required to be appropriately used to reduce a high voltage charge, reduce performance deterioration due to an excessive discharge, and so on. In view of this, the battery module is necessary to have a function that measures a battery state, such as a voltage, a current, and a temperature.

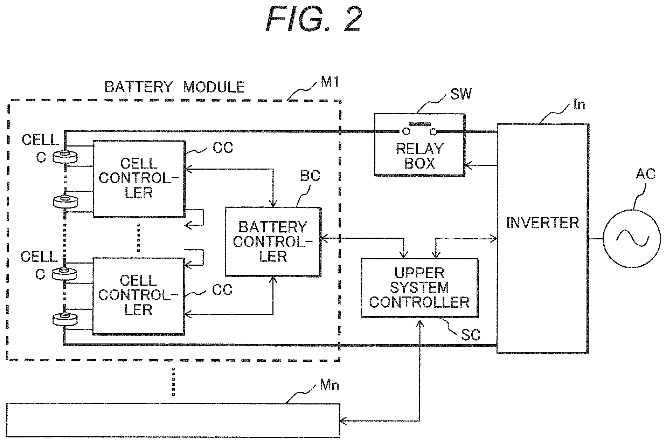

Figure 2 illustrates a configuration example of a general battery module.

As illustrated in this drawing, battery modules M1 to Mn have a configuration in which a plurality of cells C are coupled in series or coupled in series and parallel. Here, the description is given using the battery module M1 as one of the battery modules M1 to Mn. The other battery modules Mn and the like have configurations similar to that of the battery module M1.

Between both ends of the battery module M1 is coupled to an inverter In via a relay box SW to supply an AC system AC with electric power.

In the battery module M1, one cell controller CC is disposed for the predetermined number of cells C in series connection. The cell controllers CC measure states of the plurality of cells C. The plurality of cell controllers CC are coupled to a battery controller BC. The battery controller BC acquires the states of the plurality of cells C from the plurality of cell controllers CC. Furthermore, the battery controller BC operates a State of Charge (SOC) and a battery deterioration state (State of Health: SOH) from the acquired states of the plurality of cells C and notifies an upper system controller SC or the like of the arithmetic operation results.

The upper system controller SC determines the operations of the cells C, for example, from an aspect of energy saving.

While this drawing illustrates the configuration in which the system controller SC controls the plurality of battery modules M1 to Mn in the parallel connection as the case of a large-sized, high-output facility, the system controller SC may control the one battery module M1.

In this drawing, various kinds of information are exchanged between the battery controller BC and the cell controller CC and between the cell controllers CC in the battery module M1. While wired communications may be used between these controllers, wireless communications are promising from an aspect of an insulation property.

PTL 1 discloses a battery system that includes a plurality of battery modules, a battery system monitoring device that monitors states of secondary batteries provided with the plurality of respective battery modules, and antennae for communications coupled to the battery system monitoring device. Data transmitted from the antennae for communications is communicated to the battery system monitoring device via between the plurality of battery modules. This eliminates the need for an insulation by a photocoupler or the like and can reduce a dielectric breakdown of a controller and short-circuit discharge of the secondary battery caused by short-circuit of an insulating element, such as a photocoupler, thus ensuring improved reliability. PTL 1 also discloses a technique that includes communication antennae at positions opposite to modules (equivalent to the cell controllers CC in Figure 2) to ensure avoiding a poor communication due to an interference of a signal transmitted from each communication antenna.

PTL 2 discloses a wireless battery system and a wireless system that include a battery controller including one antenna and a plurality of cell controllers and can change a frequency according to a radio wave environment using time division communication slots between the battery controller and the plurality of cell controllers. PTL 2 also discloses a technique that the battery controller generates a frequency list in which priorities are set in the order from high communication reliability for each designated frequency and transmits the frequency list to the cell controller using a beacon.

**Citation List**

**Patent Literature**

PTL 1: Japanese Patent Application Laid-Open No. 2012-222913
PTL 2: WO 2016/121644

**Summary of Invention**

**Technical Problem**

Since the wireless battery system described in PTL 1 allows eliminating the need for wirings for communications and measurement inside the battery module M, the wireless battery system has a preferred configuration as a battery system. However, this wireless battery system needs to take measures in case of a poor communication. For example, in the case of presence of a spatial domain where a signal communication level is low and a communication failure such as a poor communication due to a noise from outside, the wireless battery system has room for improvement in necessity of ensuring continuation of a stable operation.

The wireless battery system described in PTL 2 includes the battery controller that always recognizes radio wave states of frequencies other than a communication frequency. Accordingly, even when a poor communication occurs, an appropriate frequency can be set and the communications can be continued and therefore the wireless battery system has a preferred configuration as the battery system. However, depending on an installation position of the antenna, the use of any communication frequency possibly results in a poor communication.

Although such a problem possibly can be solved by disposing a plurality of antennae in the battery controller, a frequency appropriate for each of the plurality of antennae differs in some cases.

Additionally, there may be a case where a repetition of a communication error decreases (a case where a poor communication does not occur comparatively) at any frequency in two or more antennae among the plurality of antennae. Since the repetition of the communication error totally decreases, the frequency in such a case is considered to be preferred.

To select any of frequencies appropriate for each of the plurality of antennae disposed in the battery controller, preparing the frequency list that summarizes candidates for appropriate frequencies is preferred. However, since this frequency list is transmitted from the battery controller due to a restriction on the current communication method, the cell controller cannot distinguish which frequency is appropriate.

Moreover, even when a plurality of the frequency lists appropriate for each of the plurality of antennae are generated, as described above, the frequency appropriate for each of the plurality of antennae differs in some cases. Thus, the plurality of frequency lists possibly have a discrepancy. In such a case, troublesomeness, such as a necessity of selecting the frequency list at switching of the antenna and transmitting the frequency list, occurs, possibly affecting smooth communications. In view of this, the actually used frequency lists need to be integrated into one. In other words, frequencies used for respective packets for communications between the battery controller (master machine) and the cell controllers (slave machines) need to be identical.

This is a new problem that occurs when the plurality of antennae are disposed in the battery controller and the frequency is changeable according to a radio wave environment.

An object of the present invention is to, in a wireless system including a plurality of antennae in a master machine, allow selecting a frequency appropriate for communications and allow handling a poor communication due to an interference from an external wireless device and a reflection and a block of a radio wave by a surrounding physical environment.

**Solution to Problem**

The present invention is a wireless battery system that includes a cell controller and a battery controller. The cell controller includes an antenna. The cell controller is equipped with a battery. The cell controller has a function that senses a state of the battery. The battery controller includes a plurality of antennae. The cell controller and the battery controller are capable of wireless transmission and reception mutually using any one of a plurality of communication channels. The battery controller has a function that selects and switches an antenna for use among the plurality of antennae and a function that selects and switches a communication channel for use among the plurality of communication channels. The battery controller has a function that switches the communication channel in use to another communication channel when a repetition of successful reception of signals transmitted from the cell controller is less than a predetermined value. Whether the communication channel is switched to the other communication channel is determined as follows: when evaluation orders meet both of the following conditions (1) and (2), a communication channel meeting the condition (2) is the other communication channel having the evaluation order higher than the evaluation order of the communication channel in use.

(1) Among the plurality of antennae, when an antenna where the repetition of the successful reception of the signals transmitted from the cell controller is equal to or more than a set value is present at least by one, a communication channel for use in the case, and
(2) among the plurality of antennae, when an antenna where the repetition of the successful reception of the signals transmitted from the cell controller is equal to or more than the set value is present by two or more, a communication channel for use in the case.

The present invention is a wireless system including a slave machine that includes an antenna and a master machine that includes a plurality of antennae. The slave machine and the master machine are capable of wireless transmission and reception mutually using any one of a plurality of communication channels. The master machine has a function that selects and switches an antenna for use among the plurality of antennae. The master machine has a function that selects and switches a communication channel for use among the plurality of communication channels. The master machine has a function that switches the communication channel in use to another communication channel when a repetition of successful reception of signals transmitted from the slave machine is less than a predetermined value. Whether the communication channel is switched to the other communication channel is determined as follows: when evaluation orders meet both of the following conditions (1) and (2), a communication channel meeting the condition (2) is the other communication channel having the evaluation order higher than the evaluation order of the communication channel in use.

(1) Among the plurality of antennae, when an antenna where the repetition of the successful reception of the signals transmitted from the slave machine is equal to or more than a set value is present at least by one, a communication channel for use in the case, and
(2) among the plurality of antennae, when an antenna where the repetition of the successful reception of the signals transmitted from the slave machine is equal to or more than the set value is present by two or more, a communication channel for use in the case.

**Advantageous Effects of Invention**

According to the present invention, in the wireless system including the plurality of antennae in the master machine, a frequency appropriate for communications is selectable and a poor communication due to an interference from an external wireless device and a reflection and a block of a radio wave by a surrounding physical environment can be handled. This allows the master machine to always distinguish radio wave states of frequencies other than a frequency used for actual communications during the communications, and even when a poor communication occurs, the frequency can be changed and the communications can be continued.

**Brief Description of Drawings**

Figure 1 is a drawing illustrating a basic configuration of a wireless battery system according to the present invention.
Figure 2 is a drawing illustrating an exemplary configuration of a general battery module.
Figure 3 is a drawing illustrating a configuration of time division communication slots between a battery controller BC and a plurality of cell controllers CC according to Example 1.
Figure 4 is a drawing illustrating a configuration of the time division communication slots between the battery controller BC and the plurality of cell controllers CC according to Example 2.
Figure 5 is a drawing illustrating a list recording the number of times of communication failure as one environment evaluation index for each fundamental frequency candidate.
Figure 6 is a drawing illustrating a list recording radio field intensity as one environment evaluation index for each fundamental frequency candidate.
Figure 7 is a flowchart depicting a process procedure in the battery controller BC when the communication failure occurs at a fundamental frequency.

Figure 8 is a depicting a process procedure in the cell controller CC when the communication failure occurs at the fundamental frequency.

Figure 9 is a drawing illustrating a time series operation until the battery controller BC and the cell controller CC are in a satisfactory communication state.

Figure 10 is a drawing illustrating a configuration of the time division communication slots between the battery controller BC and the plurality of cell controllers CC according to Example 6.

**Description of Embodiments**

The present invention relates to a wireless battery system that performs wireless communications between a plurality of controllers installed in a battery module. An application range of this communication method is not limited to communications inside the battery module, and the communication method is also generally applicable to a wireless system. Especially, even when a failure, such as a poor communication, occurs, the wireless battery system and the wireless system that stably continue operations can be provided.

In short, the present invention always measures radio wave states depending on an external wireless device and a surrounding physical environment at frequencies different from a communication frequency concurrently with communications to continue the communications by transition to an optimal frequency in case of a poor communication.

The higher a repetition of successful reception of a signal transmitted from a cell controller (slave machine) in an antenna of a battery controller (master machine) is, the smaller the number of times of communication error is. Accordingly, this repetition of equal to or more than a set value is a preferred state.

The following describes preferred embodiments of the present invention. While the master machine and the slave machines in the wireless system will be described here, by replacing the master machine with the battery controller and the slave machine with the cell controller, the contents of the description are true of the wireless battery system.

The wireless system includes the slave machine including an antenna and the master machine including a plurality of antennae. The slave machine and the master machine can mutually perform transmission and reception wirelessly using any one of communication channels among a plurality of communication channels.

The master machine has a function that selects and switches an antenna for use among the plurality of antennae and has a function that selects and switches a communication channel for use among the plurality of communication channels. The master machine has a function that switches a communication channel for use to another communication channel when the repetition of successful reception of the signals transmitted from the slave machines is less than a predetermined value.

Whether the communication channel is switched to this other communication channel is determined as follows. When evaluation orders meet both of the following conditions (1) and (2), the communication channel meeting this condition (2) is the other communication channel having an evaluation order higher than that of the communication channel in use.

(1) Among the plurality of antennae, in the case where an antenna in which the repetition of the successful reception of the signals transmitted from the slave machines is equal to or more than a set value is present at least by one, the communication channel used in that case

(2) among the plurality of antennae, in the case where an antenna where the repetition of the successful reception of the signals transmitted from the slave machines is equal to or more than the set value is present by two or more, the communication channels used in that case

A lower limit value of a proportion or the number of times of the successful reception of the signals transmitted from the slave machines is set as the predetermined value regarding the repetition of the successful reception of the signals transmitted from the slave machines described above.

The evaluation order is determined as high as an evaluation value (CH) calculated by the following Formula (1) becomes small.

$$\text{Evaluation value (CH)} = \min (\text{evaluation value (CH, antenna 1), evaluation value (CH, antenna 2)} \ldots \text{evaluation value (CH, antenna n))} + \max (\text{evaluation value (CH, antenna 1), evaluation value (CH, antenna 2)} \ldots \text{evaluation value (CH, antenna n))/ (influence coefficient)} \ldots \text{Formula (1)}$$

In the formula, the evaluation value (CH, antenna n) is an evaluation value of a radio wave environment of the channel CH in the antenna n, and the evaluation value (CH) is an evaluation value of the radio wave environment of the channel CH in all antennae. The "min" represents a function returning the minimum value among a plurality of arguments. The "max" represents a function returning the maximum value among the plurality of arguments.

The evaluation value of the radio wave environment is a value calculated using received strength and the number of times of communication failure.

In the right side of Formula (1), the maximum value of the evaluation value (CH, antenna i) shown in the second term divided by the influence coefficient for adjusting the numerical contribution is added to the minimum value of the evaluation value (CH, the antenna i) (i represents an integer from 1 to n) shown in the first term, and the evaluation value (CH) shown in the left side is calculated.

The master machine has a function that transmits a beacon to the slave machine to designate a period for the radio wave environment measurement and a measured frequency as conditions. The slave machine has a function that performs the radio wave environment measurement under the designated conditions and then replies to the master machine for the result of the radio wave environment measurement.

The above-described influence coefficient is equal to or less than the maximum value of the repetition of the successful reception of the signals transmitted from the slave machines within the certain period for the radio wave environment measurement.

The master machine has a function that increases and decreases the value of the influence coefficient to adjust a numerical contribution of the antennae in the condition (2) .

The master machine has a function that generates a frequency list regarding the radio wave environments of the plurality of communication channels and transmits this frequency list to the slave machine using the beacon.

The master machine has a function that transmits the beacon to the slave machine and has a function that switches an antenna for use in the transmission before the transmission of the beacon.

The master machine is configured to sequentially perform the radio wave environment measurements on the plurality of respective antennae in a predetermined pattern of switching the plurality of frequencies.

The wireless battery system and the wireless system preferably have a configuration that includes a display or a speaker capable of transmitting a part of or all situations of a communication environment to a user.

The following describes embodiments of the present invention in detail with reference to the drawings.

The identical reference numeral is given to the identical member in all drawings to describe the embodiments and the repetitive description is omitted.

**Example 1**

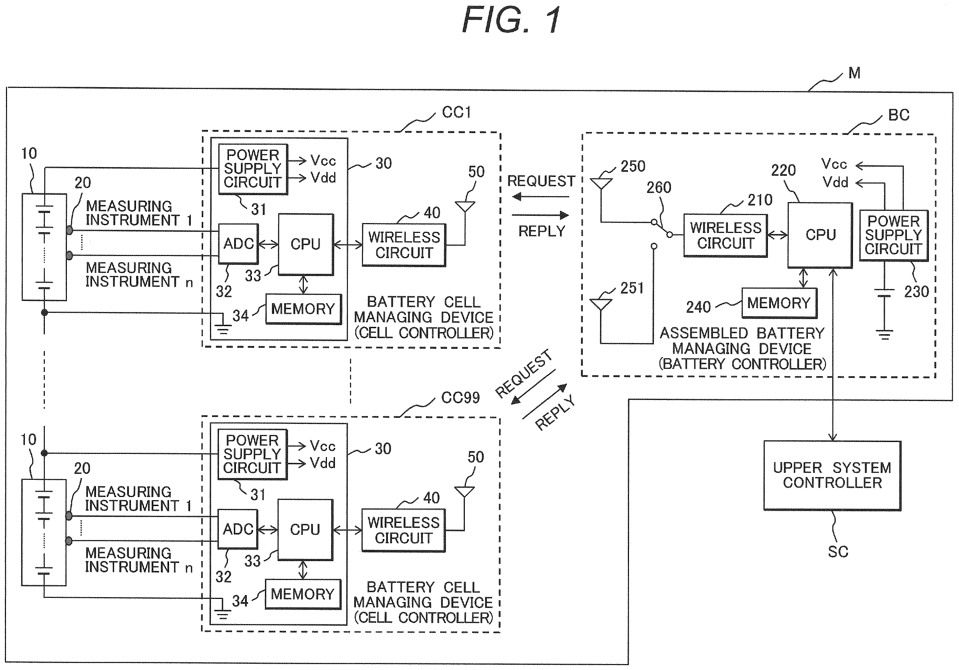

Figure 1 illustrates a basic configuration of a wireless battery system according to the present invention.

The wireless battery system illustrated in Figure 1 illustrates a configuration of a system regarding communications and measurement of a battery module M in which one of battery modules M1 to Mn in Figure 2 is used as a part equivalent to the battery module M in Figure 1.

In Figure 1, the battery module M is coupled to an upper system controller SC. In the battery module M, one of cell controllers CC1 to CC99 is each equipped with one or a plurality of battery units 10 among a plurality of batteries coupled in series. The plurality of cell controllers CC1 to CC99 are configured to wirelessly communicate with one battery controller BC. Thus, the plurality of cell controllers CC1 to CC99 are managed by the one battery controller BC. Hereinafter, the reference numeral of the cell controller is simply expressed as "CC" in some cases.

The cell controller CC has a function that should be referred to as a battery unit managing device. Additionally, the battery controller BC has a function that should be referred to as an assembled battery managing device.

The cell controller CC includes one or a plurality of measuring instruments 20 that measure the state of the battery unit 10, a processing unit 30 that acquires the state information of the battery and performs a process, a wireless circuit 40, and an antenna 50 (wireless antenna) that inputs/outputs a radio wave.

The processing unit 30 as a main part of the cell controller CC includes a power supply circuit 31, a detection circuit 32 (AD converter), a processing circuit 33 (CPU), and a storage unit (memory) 34. The power supply circuit 31 is supplied from the plurality of battery units 10 with power supply and generates an operating voltage. The detection circuit 32 detects the state of one or a plurality of batteries from the information measured by the measuring instrument 20. The processing circuit 33 diagnoses the state of one or the plurality of batteries based on the detected information detected by the detection circuit 32. The storage unit 34 stores individual identification information and the detected information or the diagnostic information or both of them.

The battery controller BC includes a wireless circuit 210, a processing circuit 220 (CPU), a power supply circuit 230 including a battery, a storage unit 240 (memory), antennae 250 and 251, and a switch 260. Although the power supply circuit 230 is supplied with electric power from the battery in Figure 1, the electric power may be supplied from the outside.

The system controller SC is achievable by being configured similarly to the battery controller BC, but in wired connection with the battery controller BC, the wireless circuit 210, the antennae 250 and 251, and the switch 260 are not provided.

The battery controller BC periodically communicates with one or more cell controllers CC to acquire the battery state or the like detected by the cell controller CC. In wireless communications between the cell controller CC and the battery controller BC in this case, the battery controller BC operates as a master and the cell controller CC operates as a slave.

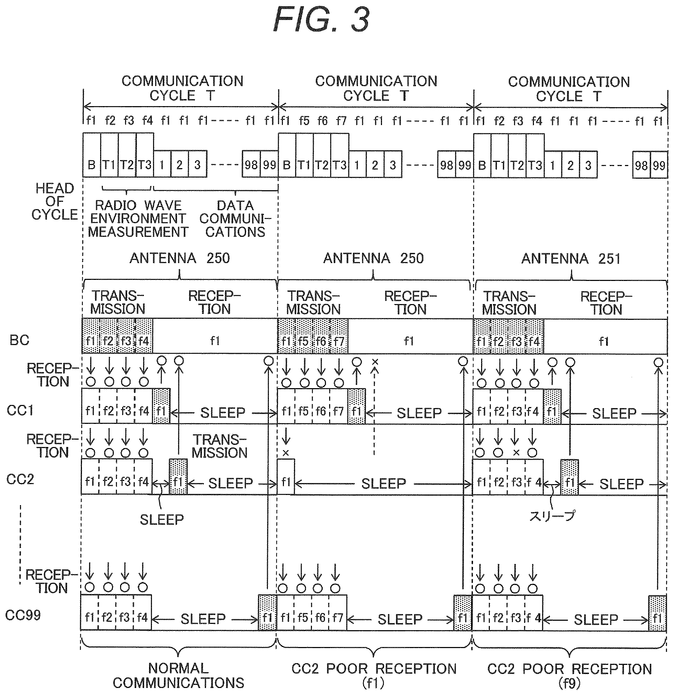

Figure 3 illustrates a configuration of a time division communication slots between the battery controller BC and the plurality of cell controllers CC. Here, communications are performed through the following sequence of processes. The communications are performed at a communication cycle T having a constant time length, the battery controller BC issues a transmission request to the plurality of cell controllers CC in the communication cycle T managed by the battery controller BC, and the plurality of cell controllers CC that have received the transmission request reply to the battery controller BC with signals held by themselves.

Figure 3 illustrates the slot configuration in the communication cycles T achieving it. It is assumed that, in Figure 3, there are 99 cell controllers CC, from the cell controllers CC1 to CC99, and the one battery controller BC manages communications between the cell controllers CC1 to CC99.

The communication slot in one communication cycle T is constituted of a beacon slot B indicative of the head of the cycle, radio wave environment measurement slots (T1, T2, and T3) continuous with the beacon slot B, and data communication slots (1 to 99). While Figure 3 illustrates the three slots of the radio wave environment measurement slots T1 to T3 as an example, the radio wave environment measurement slot only needs to be one or more slots. Similarly, the data communication slots of 1 to 99 are illustrated as an example, the data communication slot only needs to be one or more slots according to the number of the cell controllers CC.

Next, the following describes the operation of the battery controller BC.

The battery controller BC switches the switch 260 such that the wireless circuit 210 in Figure 1 can communicate with the antenna (any of the antennae 250 and 251) used in the cycle. An antenna to be used will be described later.

In the beacon slot B indicative of the head of the communication cycle in Figure 3, a frequency used for the communications is set to f1 and transmission is performed by broadcasting. The transmission data in the beacon slot B includes data indicative of being the beacon, data for communications and measurement transmitted from the battery controller BC to the cell controller CC, and data of frequencies (T1 = f2, T2 = f3, and T3 = f4 in the cycle on the left side) used in the respective radio wave environment measurement slots continuous with the beacon.

Among the data, the data indicative of being the beacon includes a so-called synchronization signal, an ID indicating that a transmitter is the battery controller BC, and the like. This allows the cell controller CC as the receiving side to perform synchronization confirmation with the transmitting side, perform a time management process in the cell controller CC, and the like.

The data for communications and measurement transmitted from the battery controller BC to the cell controller CC includes information, such as designation of a type of data (battery state such as a voltage, a current, and a temperature) to be transmitted from the cell controller CC, and a priority order of a frequency used for data communications (hereinafter referred to as "fundamental frequency"). Accordingly, the cell controller CC on the receiving side receives the data to be transmitted from the cell C and transmits the data, and uses the frequency designated by the priority order as the fundamental frequency for the data communications. The information on the priority order of the fundamental frequency and its usage will be described later.

Data of the frequencies (T1 = f2, T2 = f3, and T3 = f4 in the cycle on the left side) in the respective radio wave environment measurement slots continuous with the beacon will be described later.

After the transmission of the beacon B, the battery controller BC switches the frequency to f2 and transmits the data indicative of being the radio wave environment measurement by broadcasting in the radio wave environment measurement slot T1. Afterwards, the battery controller BC switches the frequency to f3 and transmits the data indicative of being the radio wave environment measurement by broadcasting in the radio wave environment measurement slot T2. Further, after that, the battery controller BC switches the frequency to f4 and transmits the data indicative of being the radio wave environment measurement by broadcasting in the radio wave environment measurement slot T3.

The process of the transmission request side in the battery controller BC has been described above, and the following describes a reception process from the cell controller CC. At this time, the battery controller BC sets the frequency to f1 identical to the beacon slot B and receives the transmissions from the respective cell controllers CC.

In this drawing, the frequency f1 at which the beacon slot B is transmitted and the frequency f1 used for the reception from the cell controller CC is referred to as "fundamental frequency." Additionally, the frequencies (T1 = f2, T2 = f3, and T3 = f4 in the cycle on the left side) in the respective slots of the radio wave environment measurement continuous with the beacon are ranked as "fundamental frequency candidates."

When a failure is observed in the communications at the fundamental frequency f1, a new frequency is determined as the fundamental frequency among the fundamental frequency candidates to attempt continuing the operation as the new fundamental frequency. In the radio wave environment measurement slots (T1, T2, T3) continuous with the beacon slot B, communication states at the time of these fundamental frequency candidates are monitored and measured. This operation is periodically repeated.

Depending on the cycle, the frequency of the radio wave environment measurement slot may be changed.

In Figure 3, the fundamental frequency candidates are changed in units of the three continuous communication cycles T. In the cycle on the left side of Figure 3, f2 to f4, and in the center cycle, f5 to f7 are used as the fundamental frequency candidates, and the communication environment at this time is measured.

Similarly, depending on the cycle, the antenna for use may be changed. That is, the antenna used in each communication cycle is switched to monitor and measure that each of the antennae 250 and 251 is in which communication state at each frequency. For example, using the antenna 250, after the communication cycles on the left and at the center have been completed in Figure 3, the switch 260 is switched in a communication cycle on the right such that the antenna 251 is used. This allows monitoring and measuring the communication state at each frequency in each antenna.

Meanwhile, each cell controller CC receives the beacon issued by the battery controller BC at the frequency f1. According to content of the received beacon data, a synchronization process, an ID process, confirmation of the transmission request, and update of the priority order information are performed, and further an acquisition process of the requested transmission information and the like are started. The frequencies (T1 = f2, T2 = f3, and T3 = f4 in the cycle on the left side) of the respective slots of the radio wave environment measurement are distinguished from the received data.

Afterwards, each cell controller CC sets the frequency to f2, receives the transmission from the battery controller BC in the radio wave environment measurement slot T1, and saves the reception results (whether the reception is successful and received signal strength when the reception is successful). Subsequently, each cell controller CC sets the frequency to f3, receives the transmission from the battery controller BC in the radio wave environment measurement slot T2, and saves the reception results (whether the reception is successful and received signal strength when the reception is successful). Subsequently, each cell controller CC sets the frequency to f4, receives the battery controller BC transmission in the radio wave environment measurement slot T3, and saves the reception results (whether the reception is successful and received signal strength when the reception is successful).

The frequency is returned to f1, and data according to the transmission request content, such as the data of the measured battery state (such as a voltage, a temperature, and a current) are transmitted together with the reception results in the slots T1 to T3 in the communication slot predetermined according to each cell controller CC.

The following describes a detailed operation with an example of the cell controller CC99 in the exemplary configuration of the time division communication slots in Figure 3.

In this case, the cell controller CC99 receives the beacon slot B at the frequency f1 and distinguishes the head of the communication cycle, the frequencies (f2 to f4) in the radio wave environment measurement slots (T1 to T3) continuous with the beacon slot B, and the like.

Afterwards, the cell controller CC99 switches the frequencies in the respective radio wave environment measurement slots and receives transmission data for the radio wave environment measurement from the battery controller BC. Afterwards, the cell controller CC99 sets the frequency to f1, the fundamental frequency, and sleeps until a data communication slot 99.

The cell controller CC acquires its driving power supply from the cell C; therefore, there is an object to minimize the power consumption. Accordingly, in the sleep period, the consumption is reduced as a deep sleep state, and an inner timer is used in the sleep period. After an elapse of a set period, the sleep is released, and the battery state data and the reception results in the radio wave environment measurement are transmitted in the data communication slot 99. After the data transmission, an operation to receive the beacon slot B is performed again. After this data transmission as well, the cell controller CC is in the sleep state (see the cell controller CC2). However, the cell controller CC need to awake immediately before the next reception of the beacon slot B, and the process at this time is also operated by the inner timer.

The inner timer is preferably synchronized with the battery controller BC as the transmitting side according to the reception of the beacon B. This operation is periodically repeated. The above-described operation by the cell controller CC is an operation in the case where the cell controller CC normally receives the beacon. When the cell controller CC cannot receive the beacon, the reception in the radio wave environment measurement slot and the transmission in the communication slot are not performed.

In a relationship between the battery controller BC and the plurality of cell controllers CC (CC1 to CC99) in Figure 3, the communication cycle on the left side shows a state where a failure such as a disturbance is absent. All cell controllers CC (CC1 to CC99) correctly receive the communications from the battery controller BC using the frequencies f1 to f4, and afterwards, the cell controllers CC (CC1 to CC99) correctly transmit reply signals using the frequency f1 and the battery controller BC can receive the reply signals. Then, the battery controller BC can correctly distinguish the absence of a communication failure in this communication cycle.

In the relationship between the battery controller BC and the plurality of cell controllers CC (CC1 to CC99) in Figure 3, the center communication cycle shows a state where a poor reception occurs in the cell controller CC2 due to a disturbance or the like. The cell controller CC2 that cannot sense the frequency f1 of the beacon B is in a state where the transmission request from the battery controller BC cannot be sensed and the frequencies (f2 to f4) in the subsequent radio wave environment measurement slots (T1 to T3) continuous with the beacon slot B cannot be sensed. Accordingly, the cell controller CC2 cannot start any reply operations in the center communication cycle until sensing the frequency f1 of the beacon B next.

Since the battery controller BC does not receive a reply from the cell controller CC2 in this communication cycle, the battery controller BC can correctly recognize a poor reception due to a disturbance or the like in the cell controller CC2. In this case, since the failure at the frequency f1, which is used in the beacon slot B and the transmission of the reply signal, namely, a failure at the fundamental frequency occurs, when the failure is not a transient problem, a change to the fundamental frequency candidate needs to be considered. The change process to the fundamental frequency candidate will be described later.

In the relationship between the battery controller BC and the plurality of cell controllers CC (CC1 to CC99) in Figure 3, the communication cycle on the right side shows a state where the poor reception occurs at the frequency f3. In this case, while the plurality of cell controllers CC (CC1 to CC99) expect the transmission using the frequency f3 from the data included in the beacon B and are ready for the reception, only the cell controller CC2 cannot receive the data. However, the cell controller CC2 can perform a reply process starting from the beacon B, and can perform the reply process at a slot position secured for itself.

The reply signal at this time includes the poor reception at the frequency f3; therefore, the battery controller BC can correctly recognize the poor reception at the frequency f9 in the cell controller CC2. In this case, the poor reception is sensed at the frequency f3, the fundamental frequency candidate; therefore, the battery controller BC takes measures of lowering the priority order of the frequency f3 as the fundamental frequency candidate. The priority order management as the fundamental frequency candidate will be described later.

The battery controller BC calculates evaluation values of the respective frequencies based on radio wave environment measurement information at the respective frequencies periodically transmitted by the respective cell controllers CC, namely, the number of reception errors and the received signal strength.

The evaluation value has the properties described below. A frequency inappropriate for communications, that is, a frequency having a low evaluation value is a frequency at which the communication error occurs. Since the repetition of the communication error becomes high, the communications at the frequency is inappropriate. Accordingly, the evaluation value should be low approximately proportionate to the repetition of the communication error. When the repetition of the communication error is equal, as the signal strength becomes low, a possibility of potential communication error becomes high. Therefore, in the case where the repetitions of the communication error are equal, the evaluation values should be high approximately proportionate to the strength of the signal strength.

For example, the following Formula (2) is possible as a calculation formula corresponding to this property.

$$\text{Evaluation value } (m, n) = (\text{the number of times of communication error } (m, n)) \times k + (\text{signal strength } (m, n))$$

$$\dots (2)$$

Here, m indicates an antenna number, and n indicates a frequency number. Moreover, the number of times of communication error (the number of times of communication failure) is the number of times of communication error occurred in a combination of the antenna m and the frequency n in a certain period a. The signal strength (received strength) has a value of 0 to (k - 1), and the weaker the signal is, the larger the value is.

The number of times of communication error (the number of times of communication failure) and the signal strength (received strength) are variables serving as a base for calculation of the evaluation value of the radio wave environment.

Formula (2) indicates that as the evaluation value becomes low, the frequency is preferred.

The use of Formula (2) acquires the evaluation value meeting the above-described properties. That is, in the case where the numbers of times of communication error are identical, the stronger the signal is, the lower the evaluation value becomes, that is, the evaluation value becomes preferred. When the numbers of times of communication error differ even once, regardless of the magnitude of the signal strength, the smaller the number of times of communication error is, the lower the evaluation value becomes, that is, the evaluation value becomes preferred.

The evaluation value in the combination of certain antenna m and frequency n can be thus obtained. For determination that the communications should be performed at which frequency, a frequency evaluation value found by integrating the respective evaluation values of the antennae 250 and 251 into one need to be calculated.

The frequency evaluation value has properties described below.

That is, when both antennae have preferred evaluation values, the frequency evaluation value becomes a preferred frequency evaluation value A. Even when the communication error repetition is high in one antenna, when an error does not occur in the other antenna at all, this frequency evaluation value also becomes a preferred frequency evaluation value B (Note that B is lower than A). Meanwhile, when the communication error repetition is low in both antennae, its frequency evaluation value C becomes a value lower than the frequency evaluation value B.

As a calculation formula having this property, a formula described in the following Formula (3) is used. This formula is generated by rewriting Formula (1) according to notations in this example.

```
Frequency evaluation value (n) = min (evaluation

value (250, n), evaluation value (251, n)) + max

(evaluation value (250, n), evaluation value (251, n))/p …

(3)
```

Note that min represents a function returning the minimum value among a plurality of arguments, "max" represents a function returning the maximum value among the plurality of arguments, p represents any value (influence coefficient) determining a degree of influence given to the evaluation value by the antenna in a poor communication state, and respective constants 250 and 251 are antenna numbers of the antennae 250 and 251. As the frequency evaluation value becomes low, this suggests that the frequency is preferred.

Appropriately setting the value of p and using Formula (3) obtain the frequency evaluation value meeting the above-described properties. For example, it is assumed that p is determined as the following Formula (4).

$$p = E … (4)$$

Note that E is the maximum number of times of error possibly occurred in the certain period a. In other words, E is the maximum value of the repetition of successful reception of the signals transmitted from the cell controllers in the certain period a.

It is assumed that the numbers of times of error in the antennae 250 and 251 are 0 at a frequency 1. It is assumed that the number of times of error in the antenna 250 is 0 and the number of times of error in the antenna 251 is E at a frequency 2. It is assumed that the numbers of times of error in the antennae 250 and 251 are 1 at a frequency 3. It is assumed that the signal strengths are all 0.

In this case, frequency evaluation value (1) = 0, frequency evaluation value (2) = k, and frequency evaluation value (3) = k + k/E are established, and the magnitude relationship of the respective values is: frequency evaluation value (1) < frequency evaluation value (2) < frequency evaluation value (3).

Since the above-described frequency evaluation values meet the property that should be met, it is seen that the frequency evaluation value is obtained using Formulae (3) and (4).

Setting the value of p smaller than that in Formula (4) allows increasing an influence given to the calculation of the frequency evaluation value by the antenna in a poor communication state. For example, it is assumed that p is determined as in the following Formula (5) .

$$p = E/2 \quad \dots \quad (5)$$

In this case, frequency evaluation value (1) = 0, frequency evaluation value (2) = 2k, and frequency evaluation value (3) = k + 2k/E are established. Assuming E > 2, frequency evaluation value (1) < frequency evaluation value (3) < frequency evaluation value (2) is met.

Compared with the use of Formula (4), in the case of using Formula (5), the magnitude relationship between the frequency evaluation value (3) and the frequency evaluation value (2) inverts. In the case where one antenna state is poor and therefore an advantage of using two antennae is small, this allows estimating the evaluation value at the frequency low.

The battery controller BC generates the frequency list in which the frequencies are listed in the order of the frequency evaluation value using the frequency evaluation values thus operated. When this frequency list is changed, the change is notified to the respective cell controllers CC using the beacon slot B.

The respective cell controllers CC receive, update, and hold the frequency list transmitted from the battery controller BC. This frequency list expresses the priority orders as the fundamental frequency candidates. This frequency list is notified to the respective cell controllers CC via the beacon slot B.

When the battery controller BC cannot receive the transmissions from the respective cell controllers CC at a predetermined proportion or cannot receive the transmissions continuously by the predetermined number of times, the battery controller BC selects an appropriate frequency (a frequency where the radio wave environment is the best or a frequency where the radio wave environment is good next to the fundamental frequency) from the frequency list and notifies the respective cell controllers CC of the change of the fundamental frequency using the beacon. Afterwards, the battery controller BC and the respective cell controllers CC switch the fundamental frequency for communications. Here, when the cell controller CC cannot receive the frequency change notification, the cell controller CC changes the fundamental frequency to the frequency where the radio wave environment is the best or the frequency where the radio wave environment is good next to the fundamental frequency based on the frequency list after an elapse of a predetermined period, performs the continuous reception, and searches for the beacon.

Thus, by measuring the radio wave environments at other frequencies and grasping the radio wave states while the battery controller BC and the plurality of cell controllers CC are during communications, when an error occurs at this frequency during the communications, the frequency can be switched to an appropriate frequency based on the radio wave states of the other frequencies, thus ensuring continuous communications.

Table 1 depicts a specific example to which the simplified Formula (3) is applied.

This table lists a channel 1 (CH1) and a channel 2 (CH2) as examples of the communication channels corresponding to the fundamental frequency candidates and depicts the respective numbers of times of communication error in the cases of the use of the antennae 1 and 2. Table 1 depicts the respective numbers of times of communication error by calculating the evaluation values (frequency evaluation values) obtained by substitution in the simplified Formula (3). Here, the evaluation values are calculated in the cases of p = 100 and p = 98.

It is found from this table that the evaluation values invert between the case of p = 100 and the case of p = 98. That is, in the case of p = 100, it is found that the evaluation value of the channel 1 is smaller than the evaluation value of the channel 2 and the use of the channel 1 as the fundamental frequency can be determined as preferred. Meanwhile, in the case of p = 98, it is found that the evaluation value of the channel 2 is smaller than the evaluation value of the channel 1 and the use of the channel 2 as the fundamental frequency can be determined as preferred.

It is found from this that adjusting the influence coefficient p changes the selection of the communication channel. The adjustment of the influence coefficient p is usable for correspondence to the communication environments of the wireless battery system and the wireless system.

[Table 1]

|  | Antenna 1 | Antenna 2 | Evaluation value (p = 100) | Evaluation value (p = 98) |
|---|---|---|---|---|
| Channel 1 | 100 | 0 | 0 + 100/100 = 1 | 0 + 100/98 = 1 + 2/98 |
| Channel 2 | 1 | 1 | 1 + 1/100 | 1 + 1/98 |

**Example 2**

Example 1 has described the example where the battery controller BC performs the transmission in the radio wave environment measurement slots (T1 to T3) and the respective cell controllers CC transmit the reception results of the transmission from the battery controller BC together with the battery state data in the data communication slots. In Example 2, the battery controller BC and the respective cell controllers CC both perform a reception operation and measure received signal strength in the radio wave environment measurement slots (T1 to T3). The respective cell controllers CC transmit the measurement results of the received signal strength together with the battery state data.

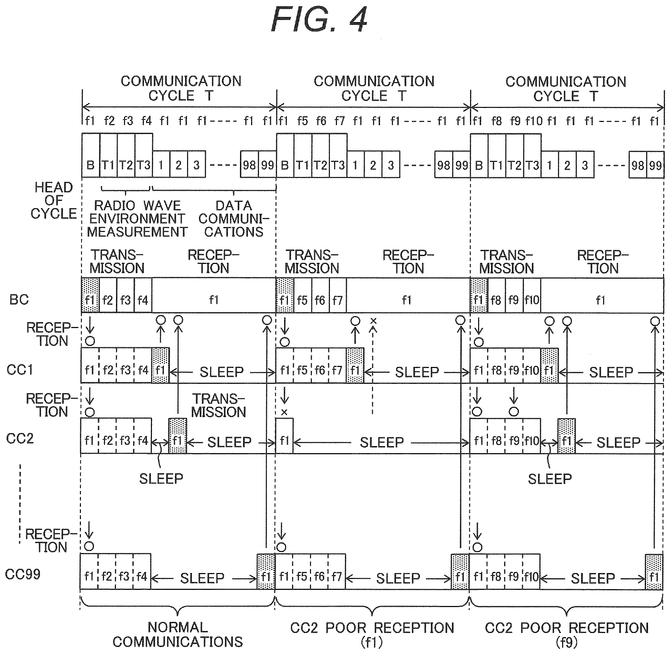

The following describes Example 2 in detail with reference to Figure 4. Except that the radio wave environment measurement slots (T1 to T3) are radio wave audible periods, there is no difference between Figure 3 and Figure 4 in terms of conditions.

In Figure 4, the battery controller BC sets the frequency to f1 in the beacon slot B indicative of the head of the communication cycle and performs transmission by broadcasting. The transmission data includes data indicative of being the beacon, data for communications and measurement transmitted from the battery controller BC to the cell controller CC, and data of frequencies (T1 = f2, T2 = f3, and T3 = f4 in the cycle on the left side) used in the respective radio wave environment measurement slots continuous with the beacon.

After the transmission of the beacon, the battery controller BC switches the frequency to f2, performs the reception operation in the radio wave environment measurement slot T1, and measures the received signal strength. Afterwards, the battery controller BC switches the frequency to f3, performs the reception operation in the radio wave environment measurement slot T2, and measures the received signal strength. Next, the battery controller BC switches the frequency to f4, performs the reception operation the reception operation in the radio wave environment measurement slot T3, and measures the received signal strength.

Next, the battery controller BC sets the frequency to f1, which is identical to that of the beacon slot B, and receives the transmissions from the respective cell controllers CC. This operation is periodically repeated. Depending on the cycle, the frequency of the radio wave environment measurement slot may be changed.

The respective cell controllers CC receive the beacon at the frequency f1 and distinguish the frequencies (T1 = f2, T2 = f3, and T3 = f4 at a cycle 1) of the respective radio wave environment measurement slots from the received data. Afterwards, the respective cell controllers CC set the frequency to f2, perform the reception operation in the radio wave environment measurement slot T1, and measure the received signal strength. Next, the respective cell controllers CC set the frequency to f3, perform the reception operation in the radio wave environment measurement slot T2, and measure the received signal strength. Next, the respective cell controllers CC set the frequency to f4, perform the reception operation in the radio wave environment measurement slot T3, and measure the received signal strength.

Then, the respective cell controllers CC return the frequency to f1 and transmit the data of the measured battery states together with the received signal strength measurement results in the slots T1 to T3 in the predetermined communication slots.

In a relationship between the battery controller BC and the plurality of cell controllers CC (CC1 to CC99) in Figure 4, the communication cycle on the left side shows a state where a disturbance or the like is absent.

In the radio wave environment measurement slots (T1 to T3), while the battery controller BC and the respective cell controllers CC perform the reception operation and measure the received signal strength, Figure 4 illustrates a state where a frequency signal at received strength becoming a failure is not received at the designated frequencies (T1 = f2, T2 = f3, and T3 = f4 in the cycle 1).

In a relationship between the battery controller BC and the plurality of cell controllers CC (CC1 to CC99) in Figure 4, the center communication cycle shows a state where a poor reception occurs in the cell controller CC2 due to a disturbance or the like. The cell controller CC2 that cannot sense the frequency f1 of the beacon B is in a state where the transmission request from the battery controller BC cannot be sensed and the frequencies (f2 to f4) in the subsequent radio wave environment measurement slots (T1 to T3) continuous with the beacon slot B cannot be sensed. Accordingly, the cell controller CC2 cannot start all reply operations in the center communication cycle until sensing the frequency f1 of the beacon B next.

Since the battery controller BC does not receive a reply from the cell controller CC2 in this communication cycle, the battery controller BC can correctly distinguish a poor reception due to a disturbance or the like of the beacon B in the cell controller CC2. Additionally, it can be distinguished that the frequency during this disturbance is f1. In this case, in the battery controller BC, a change to the fundamental frequency candidate needs to be considered.

In the relationship between the battery controller BC and the plurality of cell controllers CC (CC1 to CC99) in Figure 4, the communication cycle on the right side shows a state where a reception occurs in the cell controller CC2 at a frequency f9. In the case of Figure 4, the radio wave environment measurement slots (T1 to T3) are audible periods, and Figure 4 illustrates a state where the frequency f9 is measured through measurement and hearing of the frequency f9, which should not be audible in a normal situation.

In this case, although the plurality of cell controllers CC (CC1 to CC99) are ready to monitor and measure the frequency f9 from the data included in the beacon B and therefore should not sense the frequency f9 in a normal situation, only the cell controller CC2 has received the frequency f9. The cell controller CC2 can perform the reply process starting from the beacon B and can notify the battery controller BC of the reception (poor reception) of the frequency f9 in the reply process at the slot position secured for itself. The battery controller BC reflects this result to the change of the priority order.

As described above, in Example 1, the battery controller BC actively transmits the frequencies of the fundamental frequency candidates in the radio wave environment measurement slots and monitors the receptions. In Example 2, the frequencies of the fundamental frequency candidates are not transmitted in the radio wave environment measurement slots but are monitored only by the reception.

This method grasps a communication failure (for example, a null point) where one that should be heard in a normal situation is not heard in Example 1 and grasps a communication failure (for example, noise) where one that should not be heard in a normal situation is heard in Example 2. While the present invention can have one of the functions, needless to say, having both functions is more preferred.

While the above-described description gives the example in which the battery controller BC determines the communication failure, this function can be performed by the upper system controller.

**Example 3**

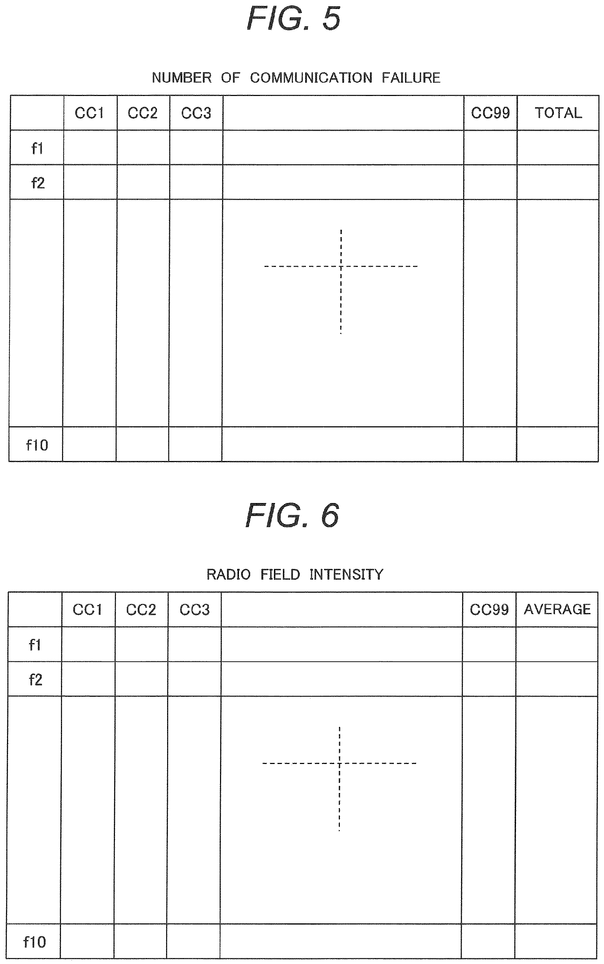

Example 1 and Example 2 have described that the radio wave environment measurement slots (T1 to T3) are disposed and the environment measurement is performed led by the battery controller BC. In Example 3, a method for recording the measured environment in this case will be described with reference to Figure 5 and Figure 6.

Figure 5 illustrates a table that records the number of times of communication failure as one environment evaluation index for each fundamental frequency candidate. This table is disposed in the battery controller BC, which determines the priority order. Each time a communication failure occurs, the recorded content is updated.

The table in Figure 5 is a matrix plotting the plurality of cell controllers CC (CC1 to CC99) on the horizontal axis and the fundamental frequency candidates (f2 to f10) on the vertical axis. The number of times of communication failure under the condition is sequentially recorded in each matrix and is updated each time a failure occurs. In the right side of the table, the total numbers of times of communication failure at these fundamental frequency candidates (f2 to f10) are recorded. Furthermore, Figure 5 illustrates an example of measuring and evaluating the fundamental frequency.

Figure 6 illustrates a table that records the measured radio field intensity as one environment evaluation index for each fundamental frequency candidate. This table is disposed in the battery controller BC, which determines the priority order, and updates the radio field intensity.

The table in Figure 6 is a matrix plotting the plurality of cell controllers CC (CC1 to CC99) on the horizontal axis and the fundamental frequency candidates (f2 to f10) on the vertical axis. The radio field intensity under the condition is recorded in each matrix. In the right side of the table, for example, average radio field intensities at these fundamental frequency candidates (f2 to f10) are recorded. Note that the radio field intensity is, for example, classified into 100 stages, from 0 to 99, and the smaller the value is, the higher the radio field intensity is. Furthermore, Figure 6 illustrates an example of measuring and evaluating the fundamental frequency.

The determination indices for priority order are determined using the tables of Figure 5 and Figure 6 prepared for each antenna.

Thus, in Example 3, in the light of the results of the environment measurement performed in Example 1 and Example 2, the battery controller BC processes the received signal strength measurement results at the frequencies of the respective fundamental frequency candidates periodically transmitted by the respective cell controllers CC and the received signal strength measurement results of the battery controller BC. Moreover, the number of times of communication failure is managed. According to these results, the frequency list in which the frequencies are listed in the order from the good radio wave environment (the order from the small received signal strength and the small number of times of communication failure). When the frequency list is changed, the change is notified to each cell controller CC using the beacon B. Each cell controller CC receives, updates, and holds the frequency list transmitted from the battery controller BC.

A situation of the communication environment including the actually used frequency and the like and the frequency list may be configured to be displayed in a display unit (display) disposed in the battery controller BC (master machine) and the like. Instead of the display in the display unit, the situation may be transmitted to a user by audio using a loudspeaker (speaker) disposed in the battery controller BC or the like. This allows the user to recognize the situation of the communication environment including the actually used frequency and the like.

**Example 4**

In Example 3, the recording method required for evaluating the measured environment and reflecting the evaluation to the priority order as the fundamental frequency candidate has been described. In Example 4, a process procedure performed by the battery controller BC and the cell controllers CC when a communication failure occurs at the fundamental frequency will be described.

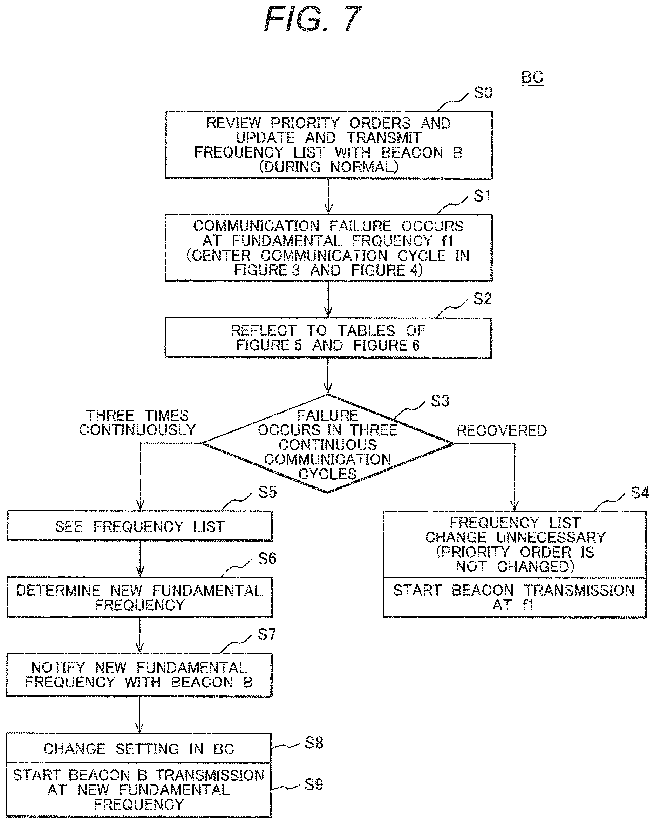

Figure 7 is a flowchart depicting a process procedure in the battery controller BC in the case where a communication failure occurs at the fundamental frequency.

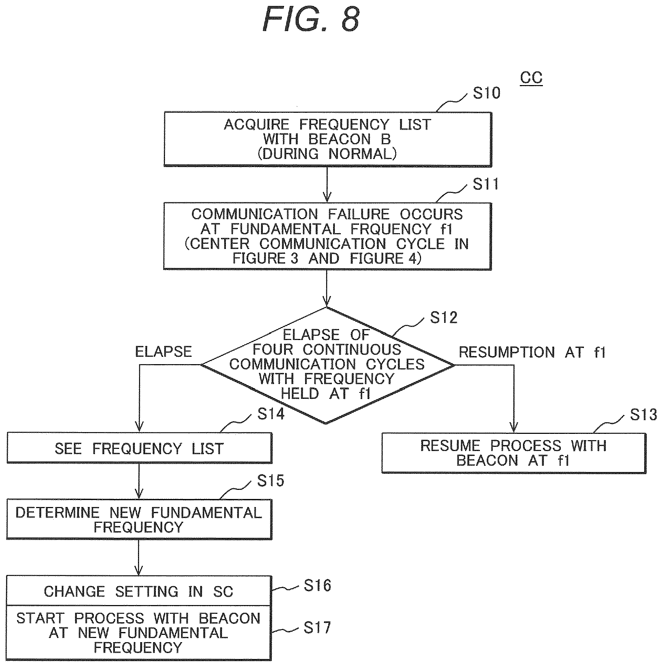

Figure 8 is a flowchart depicting a process procedure in the cell controller CC in the case where a communication failure occurs at the fundamental frequency.

In the battery controller BC of Figure 7, in a process Step S0, the frequency list is constantly updated to the latest frequency list (review of the priority orders) using the environment measurement results in Figure 5 and Figure 6 as a process in a normal state. When the frequency list is changed, the content of the latest frequency list is known to the cell controller CC through the communications with the beacon B.

In contrast to this, it is assumed that a communication failure (see the center communication cycle in Figure 3 and Figure 4) is sensed at the fundamental frequency f1 in a process step S1. This sensing is reflected to the tables of Figure 5 and Figure 6 in a process step S2.

In a process step S3 of Figure 7, when this failure is sensed three times continuously, the fundamental frequency is switched. Although the fundamental frequency can be switched at one-time failure measurement, when a matter etc. are considered that the fundamental frequency is evaluated and determined as the most reliable frequency in the advance environment measurement, the switching requiring confirmation by several times is appropriate.

Accordingly, for recovery prior to the three-time sensing, the frequency list (priority order change) is not changed at a process step S4 and the beacon transmission at the current fundamental frequency f1 is resumed.

In the case of continuous sensing, to switch the fundamental frequency, the frequency list is referred to at a process step S5, and a new fundamental frequency is determined among the fundamental frequency candidates having the highest evaluation (process step S6). At a process step S7, each cell controller is notified to switch the fundamental frequency to the new fundamental frequency using the beacon B. At a process step S8, the setting in the battery controller BC is changed and the transmission of the beacon B starts at the new fundamental frequency from a process step S9.

Meanwhile, the cell controller CC of Figure 8 acquires the content of the latest frequency list with the beacon B as the process in the normal state at a process step S10. In such a state, there may be a case where a communication failure (see the center communication cycle in Figure 3 and Figure 4) is sensed at the fundamental frequency f1 at a process step S11.

In this case, while holding a reception frequency to f1, the cell controller CC monitors the reception of the next beacon B until an elapse of four continuous communication cycles at a process step S12.

Assume that a communication failure occurs once or twice continuously, by the process (process step S4) by the battery controller BC of Figure 7, the beacon transmission at the current fundamental frequency f1 should be resumed. Accordingly, an operation only needs to be performed in accordance with this as usual at a process step S13.

Meanwhile, when the communication failure occurs three times continuously, by the processes (process steps S5 to S9) by the battery controller BC of Figure 7, the beacon transmission at the new fundamental frequency should be resumed. The battery controller BC requires the three continuous communication cycles for this determination and uses an additional one cycle for notification of the change to the new fundamental frequency to the other cell controllers CC; therefore, the resumption at the new fundamental frequency starts from the fifth cycle.

Accordingly, when the cell controller CC confirms an elapse four cycles at a process step S12, the cell controller CC refers to the frequency list in the cell controller CC at a process step S14 to determine the new fundamental frequency among the fundamental frequency candidates having the highest evaluation (process step S15). At a process step S16, the setting in the cell controller CC is changed, and the process with the beacon B at the new fundamental frequency starts at a process step S17.

Thus, according to the present invention, when the battery controller BC cannot receive the transmissions from the respective cell controllers CC at a predetermined proportion or cannot receive the transmissions continuously by the predetermined number of times, the battery controller BC selects an appropriate frequency (a frequency where the radio wave environment is the best or a frequency where the radio wave environment is good next to the current fundamental frequency) from the frequency list and notifies the respective cell controllers CC of the change of the fundamental frequency using the beacon. Then, the battery controller BC and the respective cell controllers CC switch the fundamental frequency for communications. Here, when the cell controller CC cannot receive the frequency change notification, the cell controller CC changes the fundamental frequency (changes the fundamental frequency to the frequency where the radio wave environment is the best or the frequency where the radio wave environment is good next to the current fundamental frequency) based on the frequency list after an elapse of a predetermined period, performs the continuous reception, and searches for the beacon.

By thus measuring the radio wave environments at other frequencies and grasping the radio wave states during communications between the battery controller BC and the plurality of cell controllers CC, in case of an error at this frequency during the communications, the frequency is switched to an appropriate frequency based on the radio wave states of the other frequencies, thus ensuring continuing the communications.

**Example 5**

In the above-described examples, the description has been given assuming that a sufficient volume of basic data (Figure 5 and Figure 6) to determine the priority orders in the frequency list is secured. That is, the case where the battery controller BC and the cell controllers CC are in the communication state that the battery controller BC and the cell controllers CC have undergone communications of sufficient results has been described. However, in an initial state, the sufficient data is not secured in some cases.

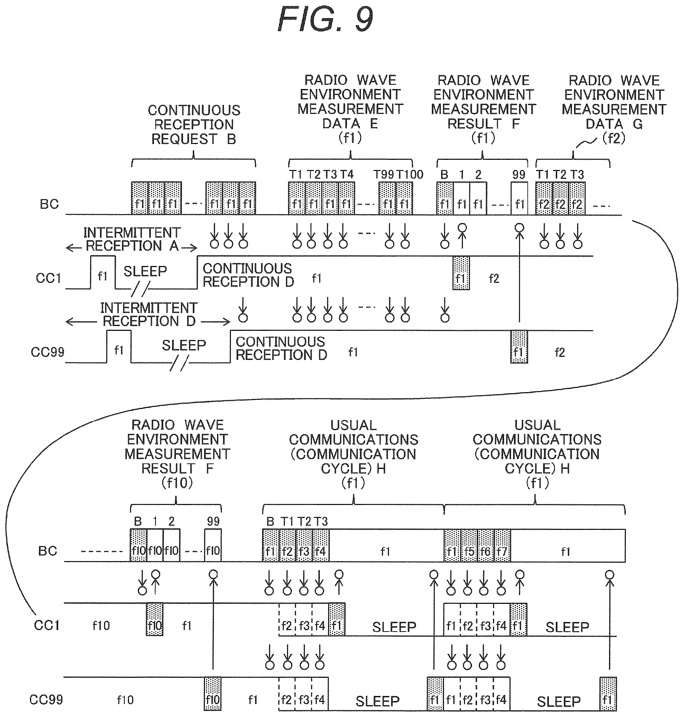

Therefore, in Example 5, a time series operation until the battery controller BC and the cell controllers CC establish the satisfactory communication state will be described with reference to Figure 9.

Figure 9 is a drawing illustrating the time series operation (a configuration of time division communication slots) until the battery controller BC and the cell controllers CC establish the sufficient communication state.

In the initial state such as immediately after the installation of the facility, when the cell controller CC is powered-on or cannot communicate with the battery controller BC, the cell controller CC repeats between the reception and a sleep state (low power consumption state) (so-called intermittent reception) at the predetermined fundamental frequency f1. A period of the intermittent reception is indicated by A in Figure 9.

Meanwhile, when the battery controller BC is powered-on or cannot communicate with the cell controller CC, the battery controller BC transmits a continuous reception request B to the cell controller CC at the predetermined fundamental frequency f1. This continuous reception request B may be continuous transmission or intermittent transmission. Although the continuous transmission request B from the battery controller BC is receivable by the cell controller CC, the cell controller CC in the sleep state cannot sense the request, and the cell controller CC in the intermittent reception state receives the request. The cell controller CC that has received the continuous reception request B transitions to a mode D in which continuous reception is performed at the frequency f1.

Next, after the battery controller BC has transmitted the continuous reception request B, the battery controller BC continuously transmits data for the radio wave environment measurement at the fundamental frequency f1 with the frequency held to the frequency f1 by one packet or more (radio wave environment measurement data E in the drawing).

When the cell controller CC receives the radio wave environment measurement data at the fundamental frequency f1, the cell controller CC saves the reception results (the number of received packets, the received signal strength at the reception).

Next, to receive the radio wave environment measurement results at the fundamental frequency candidates (f2 to F10) from the respective cell controllers CC, the battery controller BC transmits the data for the radio wave environment measurements at the fundamental frequency candidates (f2 to F10) and then transmits the beacon indicative of the head of the communication cycle. In the data of this beacon, the fundamental frequency f1 where the radio wave environment measurement is performed first is set (a radio wave environment measurement result F in the drawing). Afterwards, the battery controller BC enters the reception state at the fundamental frequency f1.

When the cell controller CC receives the beacon, the cell controller CC transmits the reception result of the radio wave environment measurement at the fundamental frequency f1 in the predetermined communication slot among the communication slots continuous with the beacon B. Afterward, the cell controller CC switches the frequency to the frequency f2 and enters the reception state.

Next, after the battery controller BC receives the reception results of the radio wave environment measurements at the fundamental frequency f1 from the respective cell controllers CC at the frequency f1, the battery controller BC switches the frequency to the frequency f2 and transmits the data for the radio wave environment measurement continuously by one packet or more (radio wave environment measurement data G in the drawing).

When the cell controller CC receives the radio wave environment measurement data, the cell controller CC saves the reception results (the number of received packets, the received signal strength at the reception).

After the battery controller BC transmits data for radio wave environment measurement (G), the battery controller BC transmits the beacon indicative of the head of the communication cycle. In the data of this beacon, the frequency f3 where the next radio wave environment measurement is performed is set. Afterwards, the battery controller BC enters the reception state at the frequency f2.

When the cell controller CC receives the beacon, the cell controller CC transmits the reception result of the radio wave environment measurement in the predetermined communication slot among the communication slots continuous with the beacon B. Afterward, the cell controller CC switches the frequency to the frequency f3 and enters the reception state.

Thus, while switching the frequencies, the battery controller BC and the cell controllers CC measure the radio wave environments. In the example of Figure 9, the radio wave environment is measured from the frequencies f1 to f10. After the battery controller transmits the data for the radio wave environment measurement at the frequency f10, the battery controller transmits the beacon indicative of the head of the communication cycle (usual communications H in the drawing). In the data of this beacon, the next frequency, f1, is set.

After the battery controller BC receives the reception results of the radio wave environment measurements from the respective cell controllers CC at the frequency f10, the battery controller BC counts the reception results (the number of received packets, received signal strength at the reception) from the respective cell controllers CC at the respective frequencies, and generates the frequency list in which the frequencies are listed in the order from good radio wave environment (an order from the small number of reception errors and the large received signal strength).

Afterwards, the beacon in usual communications is transmitted at the frequency f1 to start communications with the respective cell controllers. The data of the beacon includes the generated frequency list.

After the transmission of the radio wave environment measurement result at the frequency f10, the cell controller CC switches the frequency to the frequency f1 and enters the reception state. When the cell controller CC receives the beacon in usual communications from the battery controller BC, the cell controller CC enters a usual time division communication state and saves the frequency list included in the data of the beacon.

### Example 6

In Example 1, as illustrated in Figure 3, the method that performs communications while sequentially changing the frequencies measured in the radio wave environment measurement slots (T1 to T3) and then switches the antenna for use and performs communications while sequentially changing the frequencies similarly to measure the radio wave environment at each frequency in each antenna has been described.

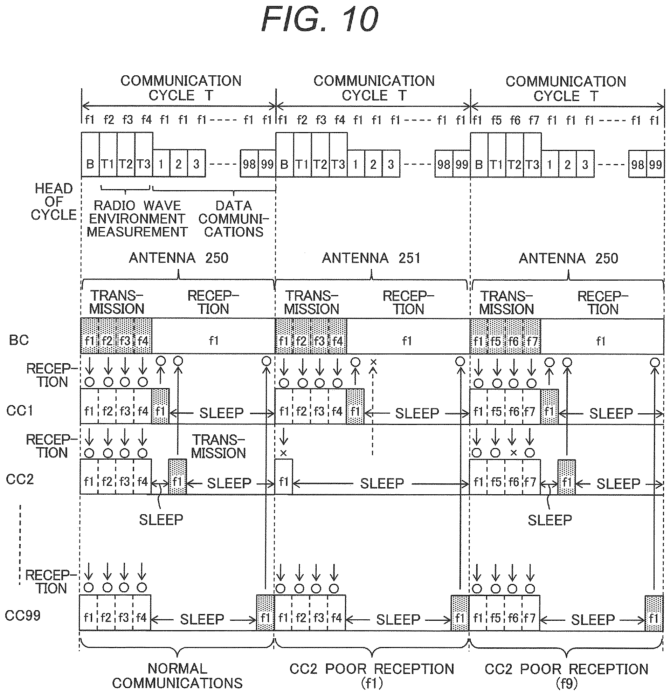

In this example, as illustrated in Figure 10, a method that switches the antenna at each communication cycle T and then changes the fundamental frequency candidates of T1, T2, and T3 will be described.

Figure 10 illustrates a configuration of the time division communication slots between the battery controller BC and the plurality of cell controllers CC.

In this example, first, the communication cycle T to the left in Figure 10 is performed using the antenna 250, and then the antenna is switched to the antenna 251, and the center communication cycle T is performed. At this time, data transmitted by the battery controller BC and data transmitted by the cell controller CC are identical between the communication cycle T to the left and the center communication cycle T. In the communication cycle T to the right, the respective frequencies of T1, T2, and T3 are changed from f2 to f5, from f3 to f6, and from f4 to f7, and communications are performed using the antenna 250 again. The data transmitted at this time may differ from that of the center communication cycle T.

Even when the communication state of one antenna is poor at the fundamental frequency f1, this configuration promptly transmits the identical data from another antenna in a good state, thereby ensuring reducing missing of data.

### Reference Signs List

| | |
|---|---|
| 10... | battery unit, |
| 20... | measuring instrument, |
| 30... | processing unit, |
| 31... | power supply circuit, |
| 32... | detection circuit, |
| 33... | processing circuit, |
| 34... | storage unit, |
| 40... | wireless circuit, |
| 50... | antenna, |
| CC... | cell controller, |
| BC... | battery controller, |
| 210... | wireless circuit, |
| 220... | processing circuit, |
| 230... | power supply circuit, |
| 240... | storage unit, |
| 250, 251... | antenna |

### Claims

1. A wireless battery system comprising:

a cell controller that includes an antenna, the cell controller being equipped with a battery, the cell controller having a function that senses a state of the battery; and

a battery controller that includes a plurality of antennae,

wherein the cell controller and the battery controller are capable of wireless transmission and reception mutually using any one of a plurality of communication channels,

the battery controller has a function that selects and switches an antenna for use among the plurality of antennae and a function that selects and switches a communication channel for use among the plurality of communication channels,

the battery controller has a function that switches the communication channel in use to another communication channel when a repetition of successful reception of signals transmitted from the cell controller is less than a predetermined value,

whether the communication channel is switched to the other communication channel is determined as follows: when evaluation orders meet both of the following conditions (1) and (2), a communication channel meeting the condition (2) is the other communication channel having the evaluation order higher than the evaluation order of the communication channel in use,

(1) among the plurality of antennae, when an antenna where the repetition of the successful reception of the signals transmitted from the cell controller is equal to or more than a set value is present at least by one, a communication channel for use in the case, and

(2) among the plurality of antennae, when an antenna where the repetition of the successful reception of the signals transmitted from the cell controller is equal to or more than the set value is present by two or more, a communication channel for use in the case.

2. The wireless battery system according to claim 1,
wherein a lower limit value of a proportion or a number of times of the successful reception of the signals transmitted from the cell controller is set as the predetermined value.

3. The wireless battery system according to claim 1,
wherein the evaluation order is determined as high as an evaluation value (CH) calculated by the following Formula (1) becomes small:

$$\text{evaluation value (CH)} = \min(\text{evaluation value (CH,}$$
$$\text{antenna 1), evaluation value (CH, antenna 2)} \dots \text{evaluation}$$
$$\text{value (CH, antenna n))} + \max(\text{evaluation value (CH,}$$
$$\text{antenna 1), evaluation value (CH, antenna 2)} \dots \text{evaluation}$$
$$\text{value (CH, antenna n))/(influence coefficient)} \dots \text{Formula}$$
$$(1),$$

(in the formula, the evaluation value (CH, antenna n) is an evaluation value of a radio wave environment of a channel CH in the antenna n, and the evaluation value (CH) is an evaluation value of the radio wave environment of the channel CH in all antennae.)

4. The wireless battery system according to claim 1,
wherein the battery controller has a function that transmits a beacon to the cell controller to designate a period for radio wave environment measurement and a measured frequency as conditions, and
the cell controller has a function that performs the radio wave environment measurement under the designated conditions and then replies to the battery controller for a result of the radio wave environment measurement and a state of the battery.

5. The wireless battery system according to claim 3,
wherein the influence coefficient is equal to or less than a maximum value of the repetition of the successful reception of the signals transmitted from the cell controller within a certain period for radio wave environment measurement.

**6.** The wireless battery system according to claim 3,
wherein the battery controller has a function that increases and decreases a value of the influence coefficient to adjust a numerical contribution of the antennae in the condition (2).

**7.** The wireless battery system according to claim 3,
wherein the battery controller has a function that generates a frequency list regarding the radio wave environments of the plurality of communication channels and transmits the frequency list to the cell controller using a beacon.

**8.** The wireless battery system according to claim 1,
wherein the battery controller has a function that transmits a beacon to the cell controller and a function that switches the antenna for use in the transmission before the transmission of the beacon.

**9.** The wireless battery system according to claim 4,
wherein the battery controller is configured to sequentially perform the radio wave environment measurements on the plurality of respective antennae in a predetermined pattern of switching a plurality of frequencies.

**10.** The wireless battery system according to claim 1, comprising a display or a speaker and being capable of transmitting a part of or all situations of a communication environment to a user.

**11.** A wireless system comprising:

a slave machine that includes an antenna; and
a master machine that includes a plurality of antennae,
wherein the slave machine and the master machine are capable of wireless transmission and reception mutually using any one of a plurality of communication channels,
the master machine has a function that selects and switches an antenna for use among the plurality of antennae and a function that selects and switches a communication channel for use among the plurality of communication channels,
the master machine has a function that switches the communication channel in use to another communication channel when a repetition of successful reception of signals transmitted from the slave machine is less than a predetermined value,
whether the communication channel is switched to the other communication channel is determined as follows: when evaluation orders meet both of the following conditions (1) and (2), a communication channel meeting the condition (2) is the other communication channel having the evaluation order higher than the evaluation order of the communication channel in use,

(1) among the plurality of antennae, when an antenna where the repetition of the successful reception of the signals transmitted from the slave machine is equal to or more than a set value is present at least by one, a communication channel for use in the case, and
(2) among the plurality of antennae, when an antenna where the repetition of the successful reception of the signals transmitted from the slave machine is equal to or more than the set value is present by two or more, a communication channel for use in the case.

**12.** The wireless system according to claim 11,
wherein a lower limit value of a proportion or a number of times of the successful reception of the signals transmitted from the slave machine is set as the predetermined value.

**13.** The wireless system according to claim 11,
wherein the evaluation order is determined as high as an evaluation value (CH) calculated by the following Formula (1) becomes small:

```
evaluation value (CH) = min (evaluation value (CH,

antenna 1), evaluation value (CH, antenna 2) … evaluation

value (CH, antenna n)) + max (evaluation value (CH,

antenna 1), evaluation value (CH, antenna 2) … evaluation

value (CH, antenna n))/(influence coefficient) … Formula

(1),
```

(in the formula, the evaluation value (CH, antenna n) is an evaluation value of a radio wave environment of a channel CH in the antenna n, and the evaluation value (CH) is an evaluation value of the radio wave environment of the channel CH in all antennae.)

14. The wireless system according to claim 11,
    wherein the master machine has a function that transmits a beacon to the slave machine to designate a period for radio wave environment measurement and a measured frequency as conditions, and
    the slave machine has a function that performs the radio wave environment measurement under the designated conditions and then replies to the master machine for a result of the radio wave environment measurement.

15. The wireless system according to claim 13,
    wherein the influence coefficient is equal to or less than a maximum value of the repetition of the successful reception of the signals transmitted from the slave machine within a certain period for radio wave environment measurement.

16. The wireless system according to claim 13,
    wherein the master machine has a function that increases and decreases a value of the influence coefficient to adjust a numerical contribution of the antennae in the condition (2).

17. The wireless system according to claim 13,
    wherein the master machine has a function that generates a frequency list regarding the radio wave environments of the plurality of communication channels and transmits the frequency list to the slave machine using a beacon.

18. The wireless system according to claim 11,
    wherein the master machine has a function that transmits a beacon to the cell controller and a function that switches the antenna for use in the transmission before the transmission of the beacon.

19. The wireless system according to claim 14,
    wherein the master machine is configured to sequentially perform the radio wave environment measurements on the plurality of respective antennae in a predetermined pattern of switching a plurality of frequencies.

20. The wireless system according to claim 11, comprising a display or a speaker and being capable of transmitting a part of or all situations of a communication environment to a user.

# FIG. 1

EP 3 633 646 A1

# FIG. 2

# FIG. 3

# FIG. 4

## FIG. 5

NUMBER OF COMMUNICATION FAILURE

| | CC1 | CC2 | CC3 | | CC99 | TOTAL |
|---|---|---|---|---|---|---|
| f1 | | | | | | |
| f2 | | | | | | |
| | | | | | | |
| f10 | | | | | | |

## FIG. 6

RADIO FIELD INTENSITY

| | CC1 | CC2 | CC3 | | CC99 | AVERAGE |
|---|---|---|---|---|---|---|
| f1 | | | | | | |
| f2 | | | | | | |
| | | | | | | |
| f10 | | | | | | |

# FIG. 7

BC

S0
REVIEW PRIORITY ORDERS AND UPDATE AND TRANSMIT FREQUENCY LIST WITH BEACON B (DURING NORMAL)

S1
COMMUNICATION FAILURE OCCURS AT FUNDAMENTAL FRQUENCY f1 (CENTER COMMUNICATION CYCLE IN FIGURE 3 AND FIGURE 4)

S2
REFLECT TO TABLES OF FIGURE 5 AND FIGURE 6

S3
FAILURE OCCURS IN THREE CONTINUOUS COMMUNICATION CYCLES

THREE TIMES CONTINUOUSLY

RECOVERED

S5
SEE FREQUENCY LIST

S6
DETERMINE NEW FUNDAMENTAL FREQUENCY

S7
NOTIFY NEW FUNDAMENTAL FREQUENCY WITH BEACON B

S8
CHANGE SETTING IN BC

S9
START BEACON B TRANSMISSION AT NEW FUNDAMENTAL FREQUENCY

S4
FREQUENCY LIST CHANGE UNNECESSARY (PRIORITY ORDER IS NOT CHANGED)

START BEACON TRANSMISSION AT f1

# FIG. 8

CC

```
┌─────────────────────────────────┐
│     ACQUIRE  FREQUENCY  LIST     │  S10
│        WITH  BEACON  B           │
│       (DURING  NORMAL)           │
└─────────────────────────────────┘
              │
              ▼
┌─────────────────────────────────┐
│  COMMUNICATION  FAILURE  OCCURS  │  S11
│    AT  FUNDAMENTAL  FRQUENCY  f1 │
│  (CENTER  COMMUNICATION  CYCLE  IN│
│    FIGURE 3  AND  FIGURE 4)      │
└─────────────────────────────────┘
              │
              ▼
           ╱ ELAPSE  OF ╲               S12
  ELAPSE ╱ FOUR  CONTINUOUS ╲  RESUMPTION  AT  f1
       ◁ COMMUNICATION  CYCLES ▷
        ╲  WITH  FREQUENCY  ╱
         ╲  HELD  AT  f1  ╱
              │                              │
              ▼                              ▼
┌───────────────────────┐ S14  ┌──────────────────────┐ S13
│   SEE  FREQUENCY  LIST │      │  RESUME  PROCESS  WITH │
└───────────────────────┘      │     BEACON  AT  f1     │
              │                 └──────────────────────┘
              ▼
┌───────────────────────┐ S15
│ DETERMINE  NEW  FUNDAMENTAL│
│       FREQUENCY        │
└───────────────────────┘
              │
              ▼
┌───────────────────────┐
│  CHANGE  SETTING  IN  SC│ S16
├───────────────────────┤
│ START  PROCESS  WITH  BEACON│ S17
│    AT  NEW  FUNDAMENTAL │
│       FREQUENCY        │
└───────────────────────┘
```

# FIG. 9

# FIG. 10

## INTERNATIONAL SEARCH REPORT

| | International application No. |
|---|---|
| | PCT/JP2018/026522 |

| A. CLASSIFICATION OF SUBJECT MATTER |
|---|
| Int.Cl. G08C17/02(2006.01)i, G08C17/00(2006.01)i, H01M10/48(2006.01)i |

According to International Patent Classification (IPC) or to both national classification and IPC

| B. FIELDS SEARCHED |
|---|
| Minimum documentation searched (classification system followed by classification symbols) |
| Int.Cl. G08C17/02, G08C17/00, H01M10/48, G01R31/36 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2000-285354 A (OSAKA GAS CO., LTD.) 13 October 2000, paragraph [0023], fig. 5 (Family: none) | 1–20 |
| A | JP 2005-192090 A (NIPPON TELEGRAPH AND TELEPHONE CORP.) 14 July 2005, paragraphs [0047]-[0069], fig. 1-4 (Family: none) | 1–20 |
| A | JP 2008-187293 A (AUTONETWORKS TECHNOLOGIES, LTD.) 14 August 2008, paragraph [0064] (Family: none) | 1–20 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 01 October 2018 (01.10.2018) | 09 October 2018 (09.10.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012222913 A
- WO 2016121644 A